# EUROPEAN PATENT APPLICATION

(11) **EP 1 923 979 A1**
(43) Date of publication of application: **21.05.2008**
(21) Application number: 06810125.2
(22) Date of filing: 07.09.2006
(51) Int. Cl.: H02K 15/02, H02K 1/02, H02K 1/16, H02K 1/18

(54) **STATOR CORE ELEMENT, PRODUCTION APPARATUS, AND PRODUCTION METHOD**

(30) Priority: 08.09.2005 JP 2005260446
(71) Applicant: TOYOTA JIDOSHA KABUSHIKI KAISHA, Toyota-shi, Aichi-ken, 471-8571 (JP)
(72) Inventor: TATEMATSU, Kazutaka, Toyota-shi, Aichi 471-8571 (JP); ENDO, Yasuhiro, Toyota-shi, Aichi 471-8571 (JP); YAMAGUCHI, Toshiya, Toyota-shi, Aichi 471-8571 (JP); HOSHINA, Eisuke, Toyota-shi, Aichi 471-8571 (JP)
(74) Representative: TBK-Patent
(86) International application number: PCT/JP2006/318218
(87) International publication number: WO 2007/029874

(57) **Abstract**

A stator core is composed of two molded powder magnetic cores joined in the axial direction. A yoke includes projections projecting axially outward from end surfaces in the axial direction of a tooth section. The length in the axial direction of the tooth section is gradually reduced toward radially outside_of the stator core, and the length in the circumferential direction of the tooth is gradually increased toward radially outside of the stator core. A molding is formed by pressing magnetic powder placed in a die by a single punch placed at one side in the axial direction and two punches parallelly placed on the other side in the axial direction. The stator core for a rotary electric machine is thus produced.

## Description

### TECHNICAL FIELD

The present invention relates to a stator core element which configures a stationary part (hereinafter also called a stator) of a rotary electric machine and a production apparatus therefor.

### BACKGROUND ART

A rotary electric machine comprising a stator and a rotor has the stator configured of a stator core having plural slots and a coil wound around a comb tooth (hereinafter also called the tooth) which is arranged between the slots. The rotor is comprised of a rotor core, a magnetized magnet, and a shaft as a rotary shaft.

By configuring as described above, the coil is supplied with prescribed power to generate a rotating magnetic field. On the basis of the generated rotating magnetic field, a magnetic flux flow is formed between the rotor and the stator to provide the rotor with a rotating force. For example, an automobile having the rotary electric machine as a power source drives its wheels by the rotating force.

Here, the stator which has a stator structure for improvement of an area ratio (hereinafter also referred to as an occupied area ratio) of a cross-sectional area occupied by the coil to a cross-sectional area of the slot has been disclosed in large numbers heretofore (see, for example, Patent Literatures 1 and 2).

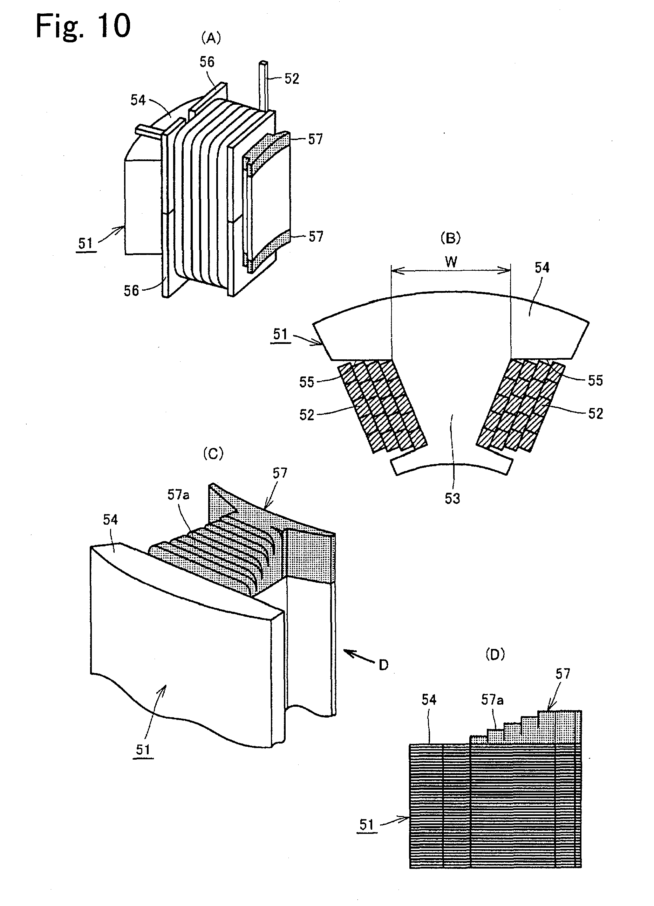

Fig. 10A to Fig. 10D are diagrams showing the structure of the stator of the rotary electric machine shown in, for example, Patent Literature 1.

Fig. 10A shows a state where a coil 52 is wound around a laminated core 51 for one pole which constitutes the stator, and Fig. 10B is a horizontal cross section of Fig. 10A.

The laminated core 51 is formed by laminating a prescribed number of electromagnetic steel sheets, and both spaces formed by a tooth portion 53 and a yoke portion 54 function as slot portions 55 for arrangement of the coil 52.

The laminated core 51 is covered with an insulating cap 56 to cover the inner surfaces (namely, the surface of a core end member 57, a side surface of the tooth portion 53, and surfaces of the yoke portion 54 and the tooth portion 53 on the side of the coil 52) of the slot portions 55 in a state where the core end member 57 described later is fitted. The coil 52 is wound a prescribed number of times around the outer circumference of the insulating cap 56 to obtain the state shown in Fig. 10A. The insulating cap 56 is omitted from Fig. 10B.

Referring to Fig. 10B, a width dimension W of the tooth portion 53 is determined such that both end surfaces are tapered so that it is gradually narrowed from the outer circumference of the stator toward the inner circumference of the stator, and projection geometry of the slot portion 55 which is formed at both sides of the tooth portion 53 becomes a parallelogram or a rectangle.

Fig. 10C shows a state where the coil 52 and the insulating cap 56 of Fig. 10A are removed, and Fig. 10D shows a view taken in the direction of the arrow D of Fig. 10C.

Referring to Fig. 10C, the core end member 57 which has substantially the same profile shape as the projection geometry of the tooth portion 53 is fitted to both end surfaces in the lamination direction of the laminated core 51. The core end member 57 is formed of a compact of magnetic powder, and a coil pressure receiving surface 57a on the surface is formed to become higher in a stepwise manner from the outer circumference of the stator toward the inner circumference (see Fig. 10D).

By configuring as described above, a magnetic flux passes through the tooth portion 53 when the laminated core 51 functions as a part of the rotary electric machine. The width dimension W of the tooth portion 53 at a tip end portion of the stator inner circumference is small, so that a magnetic flux density becomes high, and there is a possibility that the magnetic flux will be saturated. Therefore, in the stator structure, the core end member 57 which is arranged on both end surfaces in a steel plate-laminated direction of the laminated core 51 functions as a magnetic path. However, the core end member 57 has variable magnetic properties depending on its material, so that the inner circumference, the outer circumference and the center portion along the radial direction are determined to be an equivalent sectional area, and it is determined such that the obtained values become equal to one another.

When configured as described above, the dead spaces of the slot portions 55 are decreased, an occupied area ratio of the coil 52 in the slot portions 55 is improved, and a small and high power rotary electric machine can be realized.

Here, the Patent Literature 1 is JP-A 2002-369418, and the Patent Literature 2 is JP-A 2005-45898.

However, in the existing stator structure shown in Fig. 10A to Fig. 10D, the occupied area ratio of the coil 52 is improved, but it is apparent from Fig. 10D that a winding portion (coil end portion) of the coil 52 formed in the axial direction has a shape projected from the yoke portion 54 because of the core end member 57 which is arranged on both end surfaces in the axial direction of the tooth portion 53. Therefore, the rotary electric machine configured of the above stator has a disadvantage in view of mountability.

Also, the core end member 57 is formed such that the coil pressure receiving surface 57a of the surface is formed into a step-like shape rising stepwise from the outer circumference toward the inner circumference of the stator, but sophisticated pressing control for homogenizing the density of the magnetic powder of the compact in the molding step is required in order to integrally form such a complex shape from the compact of the magnetic powder. This makes the molding step complex and improvement of the productivity of the stator core difficult. Therefore, the productivity of the stator core can be improved by facilitating the pressing control in the molding step as much as possible.

### SUMMARY OF THE INVENTION

The present invention relates to stator core elements, a plurality of which are annularly arranged around the axis to configure a stator of a rotary electric machine. The stator core element comprises a yoke portion which is arranged at the outer circumference of the stator, and a tooth portion which is inwardly projected from the yoke portion, wherein the tooth portion has a cross section, which is formed by a plane passing through the center parallel to the axis, having a trapezoidal shape extending inwardly and a cross section, which is formed by a plane perpendicular to the axis, having a trapezoidal shape extending outwardly.

By configuring as described above, the coil can be wound efficiently around the tooth portion, and the magnetic flux is hardly saturated in the tooth portion.

Also, according to the production apparatus of the invention, the stator core element can be produced efficiently from the compact of a compressed powder magnetic core.

### BRIEF DESCRIPTION OF THE DRAWINGS

Fig. 1 is a perspective view of a stator core element for one pole of a stator of a rotary electric machine according to an embodiment of the invention.
Fig. 2 is a sectional view in the circumferential direction of the stator core element of Fig. 1.
Fig. 3 is a sectional view in the axial direction of the stator core element of Fig. 1.
Fig. 4 is a diagram illustrating the cross sections perpendicular to the radial direction of the tooth of the stator core element shown in Fig. 1.
Fig. 5 is an explanatory view showing a magnetic flux flow within the stator core element.
Fig. 6 is a diagram showing a molding step of the stator core element when a general forming method is applied.
Fig. 7 is a perspective view of the stator core element for one pole of the rotary electric machine according to the invention.
Fig. 8 is a sectional view in the axial direction of the stator core element of Fig. 7.
Fig. 9 is a diagram illustrating a molding step of a compact D1 (= D2).
Figs. 10A, 10B, 10C, 10D are diagrams showing the structure of a stator of the rotary electric machine disclosed in Patent Literature 1.

### BEST MODE FOR CARRYING OUT THE INVENTION

Embodiments of the invention are described in detail with reference to the figures. It is to be understood that like parts or corresponding parts are denoted by like reference numerals in the figures.

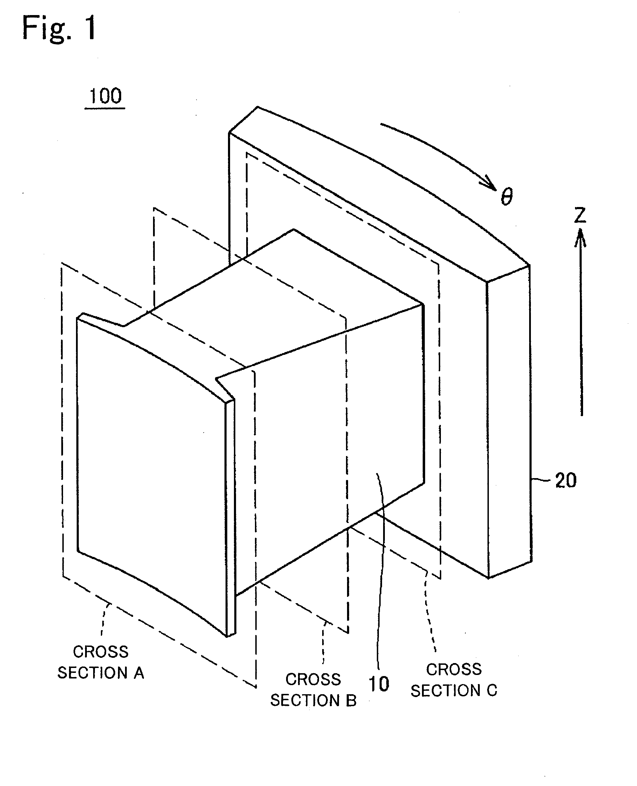

Fig. 1 is a perspective view of a stator core element 100 for one pole of a stator of a rotary electric machine according to an embodiment of the invention. It is not shown in the figure but the stator core as a whole has a hollow cylindrical shape with the stator core element 100 for one pole of Fig. 1 arranged annularly for the pole number of the rotary electric machine. The stator core includes an annular yoke portion, a tooth portion which is composed of a prescribed number of teeth projected inward in the radial direction at the inner circumference of the yoke portion, and a prescribed number of slots which are formed between the mutually adjacent teeth and projected in the axial direction. The individual stator core elements 100 are each provided with a single tooth, the number of teeth and slots corresponds to the pole number of the rotary electric machine, and they are annularly arranged at a prescribed interval. A rotor is disposed at the center portion of the stator core. The output shaft (rotary shaft) of the rotor is positioned at the center of the annular stator core. Accordingly, the axial direction in the following description indicates the rotary shaft and its parallel direction, and the radial direction and the circumferential direction are also defined with the rotary shaft determined as the center.

Referring to Fig. 1, the stator core element 100 which configures an arbitrary one pole includes a plate arc-shaped yoke portion 20 and a tooth 10 which is projected inwardly from the center of the inner surface of the yoke portion 20 to form a substantially T-shaped form as a whole. The stator core element 100 is formed of a magnetic core (hereinafter also called a compressed powder magnetic core) which is formed by compression molding of magnetic powder in a molding die, and the yoke portion 20 and the tooth 10 are integrally formed by a stator core element production apparatus described later.

A slot is formed at both sides of the tooth 10 in the circumferential direction (corresponding to direction θ in the figure) with respect to its adjacent tooth 10 (not shown). A coil is not shown in the figure but wound around the individual teeth 10 and fixed.

Here, the stator core element 100 according to this embodiment has a different length in the axial direction (corresponding to direction Z in the figure) between the yoke portion 20 and the tooth 10. In detail, the yoke portion 20 has a projected portion, which is projected from both end faces of the tooth 10 in the axial direction to both sides in the axial direction as shown in Fig. 1. Therefore, the yoke portion 20 is longer than the tooth 10 by the projected portions in the axial direction. The axial direction suggests the direction of the rotary shaft of an unshown rotor, and the radial direction suggests a radial direction of the rotor.

In addition, the stator core element 100 according to this embodiment has the tooth 10 with a modified cross section so that its cross-sectional shape perpendicular to the radial direction is gradually varied along the radial direction. For example, the tooth 10 of Fig. 1 has a different shape among a cross section (corresponding to cross section A in the figure) located closest to the inner circumference, a cross section (corresponding to cross section C in the figure) located closest to the outer circumference, and a cross section (corresponding to cross section B in the figure) located at the middle of them. Among the individual cross sections in the radial direction including these cross sections A to C, there is established a relationship that they all are rectangles having the same area with a different aspect ratio (the ratio of vertical length and horizontal length) from one another as described below. The stator core element 100 configured as described above is easily produced by forming from a compressed powder magnetic core.

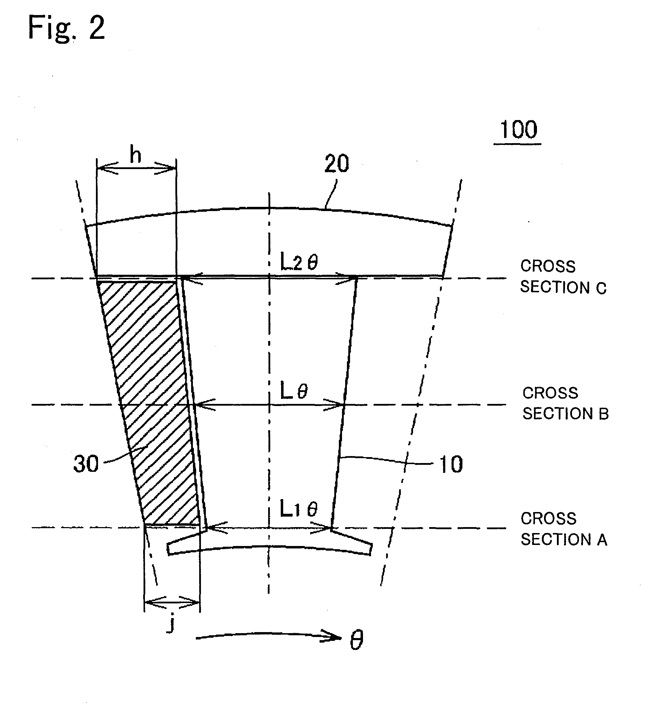

Fig. 2 is a sectional view in the circumferential direction (the direction perpendicular to the axial direction) of the stator core element 100 of Fig. 1.

Referring to Fig. 2, the tooth 10 in the stator core element 100 has a substantially fan-shaped cross section, and its length in the circumferential direction becomes gradually short toward the inner circumference. Specifically, it is assumed that the cross sections A to C along the radial direction shown in Fig. 1 have lengths L₁θ, Lθ, L₂θ in the circumferential direction. Then, a relationship of L₁θ<Lθ<L₂θ is established among them.

When the tooth 10 is configured to have such a fan-shaped cross section perpendicular to the axial direction, a slot 30 formed on both sides of the tooth 10 has a substantially rectangular shape as indicated by the shaded area in the figure. In other words, a difference between a width h in the circumferential direction of the cross section C and a width j in the circumferential direction of the cross section A is relatively small in the shaded area. Thus, it becomes possible to wind the coil on the side of the inner circumference of the tooth 10, and an occupied area ratio of the coil in the slot 30 is improved. For example, in a case where a rectangular copper wire is used as the coil, the coil is aligned with regularity in the slot 30, so that the coil can be made dense, and the occupied area ratio can be further improved.

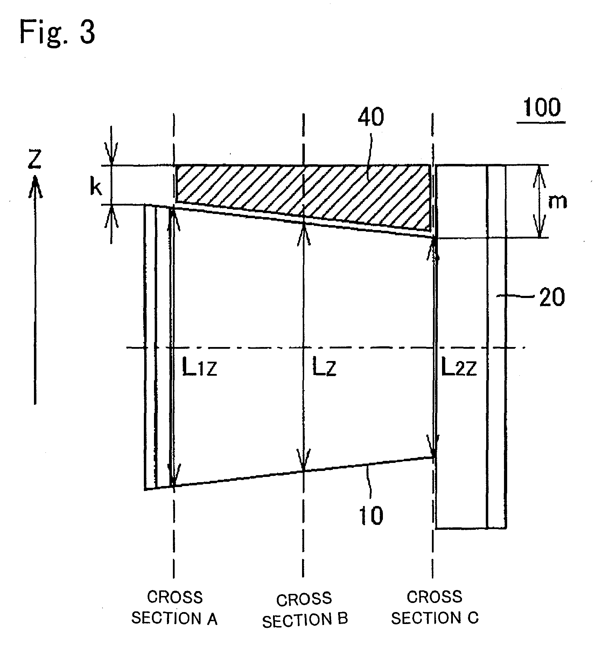

Fig. 3 is a sectional view in the axial direction of the stator core element 100 of Fig. 1.

It is apparent from Fig. 3 that the tooth 10 has its length in the axial direction gradually varied along the radial direction. In detail, the length in the axial direction becomes gradually short toward the outer circumference of the stator. It is assumed that the cross sections A to C along the radial direction shown in Fig. 1 have lengths L₁Z, LZ, L₂Z in the axial direction. Then, a relationship of L₁Z>LZ>L₂Z is established among them. In addition, it is seen that the length L₁Z in the axial direction of the longest cross section A is shorter than the length in the axial direction of the yoke portion 20.

Here, it is seen from Fig. 2 and Fig. 3 that the tooth 10 has relationships of L₁θ<Lθ<L₂θ and L₁Z>LZ>L₂Z among the cross sections A, B and C in terms of the length in the circumferential direction and the axial direction. Specifically, the tooth 10 has a large length in the circumferential direction and a short length in the axial direction from the inner circumference toward the outer circumference of the stator side (rotor side). The stator core element 100 is different from the conventional stator core element with the length of the tooth portion 53 in the axial direction maintained constant shown in Figs. 10A to 10D in the points that the shape of the tooth 10 is changed not only in the circumferential direction but also in the axial direction. Also, in the point that the length in the axial direction of the yoke portion 20 is greater than the maximum value of the length in the axial direction of the tooth 10, and the stator core element 100 is different from the conventional stator core element shown in Figs. 10A to 10D in that the length in the axial direction of the yoke portion 54 is shorter than the length in the axial direction of the tooth portion (the tooth portion 53 + the core end member 57).

In addition, the yoke portion 20 to be bonded with the tooth 10 at the outermost circumference of the tooth 10 has the projected portion which is projected from both end surfaces in the axial direction of the tooth 10 outward in the axial direction as described above. Length m in the axial direction of the projected portion is equal to the difference in height between the end surface in the axial direction of the yoke portion 20 and the end surface in the axial direction at the outermost circumference of the tooth 10. In addition, length k in the axial direction also has a difference in height between the end surface in the axial direction of the yoke portion 20 and the end surface in the axial direction at the innermost circumference of the tooth 10.

When the coil is wound around the tooth 10, both ends of the coil projected along the axial direction from the slot 30 form a coil end portion 40 which is a coil part located at either end in the axial direction. In the conventional stator core element where the length in the axial direction of the tooth portion (including the core end member) is longer than that in the axial direction of the yoke portion, the coil end portion 40 is in a state projected from either end surface in the axial direction of the stator core element.

In this embodiment, the tooth 10 and the yoke portion 20 are determined to have a shape so that a height difference between the end surface in the axial direction of the coil end portion 40 and the end surface in the axial direction of the yoke portion 20 is eliminated and the two end surfaces have substantially the same plane as shown in Fig. 3.

In detail, the winding, space of the coil in the slot 30 has the width j in the circumferential direction and the width h in the circumferential direction at the cross section A and the cross section C as indicated by the shaded area in Fig. 2. Therefore, when the coil is wound, the coil end portion 40 formed in the axial direction also has a height substantially equal to the width j and the width h in the axial direction at the cross section A and the cross section C. If the length in the axial direction of the tooth 10 is equal to that in the axial direction of the yoke portion 20, both end surfaces of the coil end portion 40 are projected from the stator core element 100 by the height j and the height h at the cross section A and the cross section C.

In the stator core element 100 of this embodiment, the height difference k between the end surface in the axial direction of the yoke portion 20 at the cross section A and the end surface in the axial direction of the tooth 10 is determined to be substantially equal to the height j in the axial direction of the coil end portion 40 at the cross section A. In addition, the height difference m (= length in the axial direction of the projected portion of the yoke portion 20) between the end surface in the axial direction of the yoke portion 20 and the end surface in the axial direction of the tooth 10 at the cross section C is determined to be substantially equal to the height difference h of the coil end portion 40 at the cross section C.

By configuring as described above, the coil end portion 40 which is formed when the coil is wound around the tooth 10 is substantially housed within the size without being projected in the axial direction from the stator core element 100. Thus, the mountability of the rotary electric machine can be improved.

As described above, the rotary electric machine applying the stator core element of this embodiment has its mountability improved while maintaining a high occupied area ratio of the coil by providing the yoke portion 20 of the stator core element 100 with the projected portion and designing the tooth 10 to have a modified cross section with an aspect ratio gradually varied along the radial direction.

Here, when the occupied area ratio of the coil in the slot 30 is improved, the magnetic flux generated in the tooth 10 is increased, and generation of a larger output torque is expected. However, if the magnetic flux which becomes invalid due to the saturation of the magnetic flux is increased in the stator core element 100, torque fluctuation or iron loss is caused to adversely deteriorate the performance of the rotary electric machine.

Therefore, this embodiment is configured to vary the aspect ratio while the cross section perpendicular to the radial direction is maintained to have a constant area in the shape of the tooth 10 as described above. Also, the yoke portion 20 has a shape configured considering the reduction of the leaked magnetic flux. Details are described below.

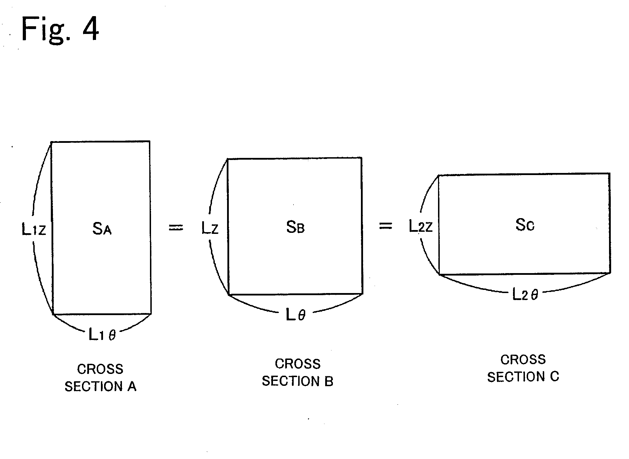

Fig. 4 is a diagram illustrating the cross sections perpendicular to the radial direction of the tooth 10 of the stator core element 100 shown in Fig. 1. In the figure, the aspect ratio is exaggeratedly changed to illustrate in an easily comprehensible manner.

Referring to Fig. 4, the cross sections A to C each of the tooth 10 in Fig. 1 have a substantially rectangular shape and relationships of L₁Z>LZ>L₂Z and L₁θ<Lθ<L₂θ on the individual sides in the axial direction and the circumferential direction as described above.

In addition, if it is assumed that the cross sections A to C have cross-sectional areas SA, SB, SC, then there is a relationship of SA=SB=SC among them. In other words, the shape of the tooth 10 has a ratio (aspect ratio) between the side in the axial direction and the side in the circumferential direction gradually changed while the cross section perpendicular to the radial direction is maintained to have a constant area. Especially, this embodiment can be designed with the aspect ratio reversed while keeping the constant area in the relationship between the cross section A and the cross section C as shown in Fig. 4. However, such a structure is not desirable because the length in the circumferential direction of the tooth 10 at the inner circumference becomes large.

Here, the cross section perpendicular to the radial direction of the tooth 10 is determined to have the constant area because of the following reasons.

The magnetic flux generated within the stator core element 100 passes through the tooth 10 in the radial direction (direction perpendicular to the cross sections A to C of the tooth 10). Then, if the concentration of the magnetic flux causes localized magnetic flux saturation in the tooth 10, a valid magnetic flux that links the coil is decreased. By the generated invalid magnetic flux, iron loss and torque fluctuation called cogging torque are generated in the rotary electric machine. The cogging torque and the iron loss lower motor efficiency and also cause noise and vibration, so that it is necessary to make the magnetic flux density distribution uniform in the stator core element 100 and to reduce the magnetic flux saturation. Accordingly, when it is assumed that the cross section perpendicular to the radial direction of the tooth 10 has a constant area, the magnetic flux density distribution in the tooth 10 can be made uniform and the cogging torque and the iron loss can be suppressed from being generated as described in connection with Fig. 4.

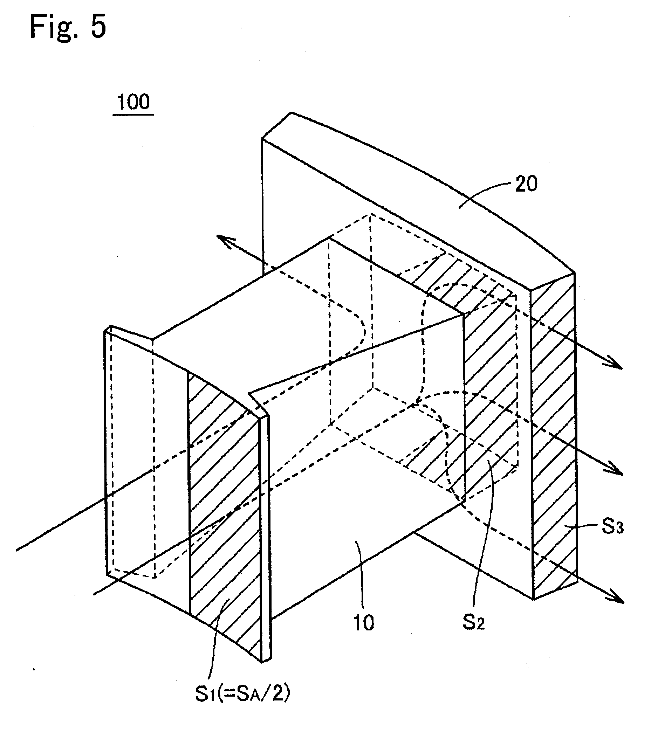

Fig. 5 is an explanatory view showing a magnetic flux flow within the stator core element 100.

Referring to Fig. 5, the magnetic flux having passed through the tooth 10 along the radial direction flows into the yoke portion 20 via the bonded surface (hereinafter also called simply the bonded surface) between the tooth 10 and the yoke portion 20 as indicated by arrows. The magnetic flux having flown into the yoke portion 20 further flows to mutually opposite sides along the circumferential direction in the yoke portion 20.

Here, it is known that the above-described cogging torque is also generated by the generation of the leaked magnetic flux in the paths for the magnetic flux routing from the tooth 10 to the yoke portion 20 via the bonded surface. In order to suppress the leaked magnetic flux, it is necessary that the cross-sectional area for the passage of the magnetic flux in the path for the magnetic flux does not decrease. For that, it is adequate if the area of the bonded surface is equal to or larger than the cross section perpendicular to the radial direction of the tooth 10. In addition, it is adequate if the area of the cross section perpendicular to the circumferential direction of the yoke portion 20 is at least 1/2 or more of the cross section perpendicular to the radial direction of the tooth 10.

In other words, if at least either 1/2 (corresponding to the area of a shaded region S2) of the area of the bonded surface and the cross-sectional area (corresponding to the area of a shaded region S3) perpendicular to the circumferential direction of the yoke portion 20 is smaller than a cross-sectional area S1 (= corresponding to 1/2 of the whole area SA) perpendicular to the radial direction of the tooth 10, the leaked magnetic flux is generated at that portion. The above-described 1/2 results from the divided flows in mutually opposite directions to the circumferential direction of the magnetic flux having passed through the tooth 10 at the yoke portion 20.

Specifically, the shape of the yoke portion 20 in this embodiment is decided so that the relationships of S1≦S2 and S1 ≦S3 are satisfied in addition to the relationship with the above-described coil end portion 40.

As described above, the stator core element of this embodiment can realize the rotary electric machine which has remarkable mountability and high output in small size by the projected portion disposed on the yoke portion 20 and the modified cross section disposed on the tooth 10. Since the shapes of the tooth 10 and the yoke portion 20 are decided considering the reduction of the invalid magnetic flux, the efficiency of the rotary electric machine can be prevented from lowering and noise and vibration can be prevented from being generated.

A production apparatus for producing the stator core element 100 according to the invention is described below. The production apparatus for the stator core element 100 includes a molding step for forming a compact of the compressed powder magnetic core described below and a bonding step for forming the integral stator core element 100 by bonding in the axial direction two compacts of compressed powder magnetic cores formed by the molding step. In other words, the stator core element 100 is configured of the two compacts (split stator core elements) of the compressed powder magnetic cores bonded in the axial direction.

It is general that the compressed powder magnetic core forming step adopts a method where magnetic powder which has each particle coated with an oxide film charged in a molding die, and pressure forming is performed to form a desired integral body.

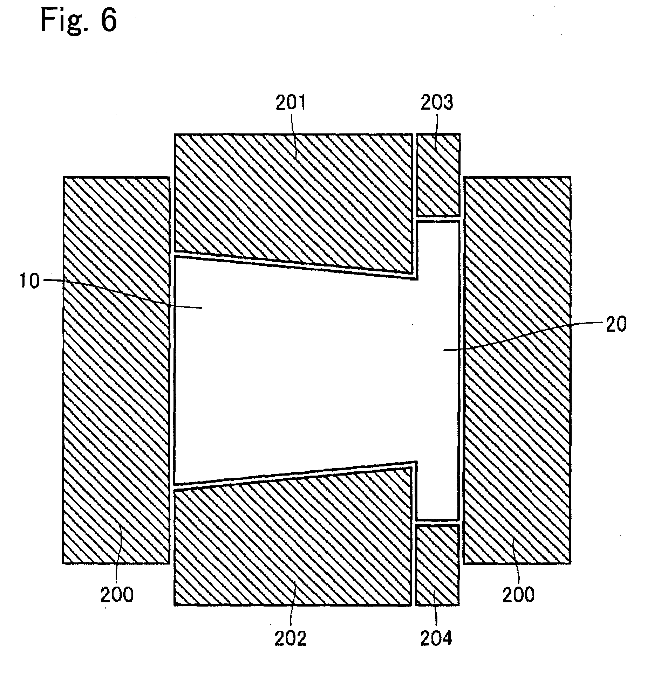

Fig. 6 is a diagram showing a common forming method for molding the stator core element 100 having the above-described shape.

Referring to Fig. 6, the magnetic powder is charged in a die 200 which is a molding die after individual particles are coated with an oxide film. The charged magnetic powder is pressed in the vertical direction by punches 201, 203 which are disposed above the die 200 and punches 202, 204 which are disposed below. The pressing direction in Fig. 6 corresponds to the axial direction of the formed stator core element 100. Thus, the stator core element 100 is integrally formed.

In the compressed powder magnetic core forming step shown in Fig. 6, the punches 201, 203 disposed above the die 200 are configured of two punches including the punch 203 for forming the yoke portion 20 by pressing and the punch 201 for forming the tooth 10 by pressing. The portion below the die 200 is also configured of the punch 204 for forming the yoke portion 20 and the punch 202 for forming the tooth 10. In other words, the yoke portion 20 and the tooth 10 are formed under pressure by different pressing members.

Thus, the punches 201 to 204 above and below the die 200 are separately configured because the end surface in the axial direction of the stator core element 100 of this embodiment has a plane surface portion corresponding to the end surface in the axial direction of the yoke portion 20 and an inclined surface portion corresponding to the end surface in the axial direction of the tooth 10.

In detail, when the upper and lower punches 201 to 204 are each configured of a single punch, the magnetic powder which forms the tooth 10 and the yoke portion 20 is uniformly pressed by a constant stroke (a movement) set on the pertinent single punch. At this time, the length in the axial direction of the tooth 10 gradually becomes short toward the outer circumference of the stator, the pressure applied to the magnetic powder for forming the tooth 10 in the pressing process becomes uneven in the radial direction, and the pressure applied to the outer circumference of the stator becomes higher than the pressure applied to the outer circumference of the stator. Therefore, the magnetic powder which is assumed to configure the tooth 10 flows from the outer circumference of the stator of the tooth 10 having a lower pressure into the yoke portion 20. Therefore, the stator core element 100 after it is formed under pressure suffers from deviations in the density of the magnetic powder so that it is relatively low in the tooth 10 on the side of the inner circumference of the stator, and relatively high in the tooth 10 on the side of the outer circumference of the stator and in the yoke portion 20.

Also, the deviations in the density of the magnetic powder deteriorate the strength of the entire stator core element 100. Especially, there is a possibility of cracks in a constricted portion of the stator core element 100, which is the bonded portion between the yoke portion 20 and the tooth 10. A rotary electric machine which is provided with the stator formed by winding the coil around the tooth 10 might have a problem that magnetic flux generated in the stator core element 100 becomes heterogeneous and a desired motor performance cannot be obtained.

To remedy the deviations in the density of the magnetic powder, a single punch is divided into the punches 201, 202 for forming the tooth 10 and the punches 203, 204 for forming the yoke portion 20 so to perform pressing control separately by the individual punches as shown in Fig. 6. Thus, the stroke of the punch 201 and the stroke of the punch 203 which are disposed above the die 200 can be controlled separately to have the magnetic powder of the compact with uniform density. Similarly, the stroke of the punch 202 and the stroke of the punch 204 which are disposed below the die 200 are controlled separately. In other words, a compact of the magnetic powder having uniform density can be formed by separately controlling the strokes of the four punches 201 to 204 in total.

However, in a case where the above pressing control is applied to a real molding step, the strokes of the four punches 201 to 204 are separately controlled, so that the pressing control has four degrees of freedom, and the control becomes complex. As a result, the production cost increases, and the productivity tends to decrease. Therefore, to improve the productivity, it is desired that a degree of freedom of the pressing control is low.

To improve the productivity of the stator core element 100 in this embodiment, the two compacts of the compressed powder magnetic cores are bonded to form the stator core element 100 as described below. The stator core element 100 described below is also called a split-type stator core element 100 in contrast with the integral-molded stator core element 100 of Fig. 6.

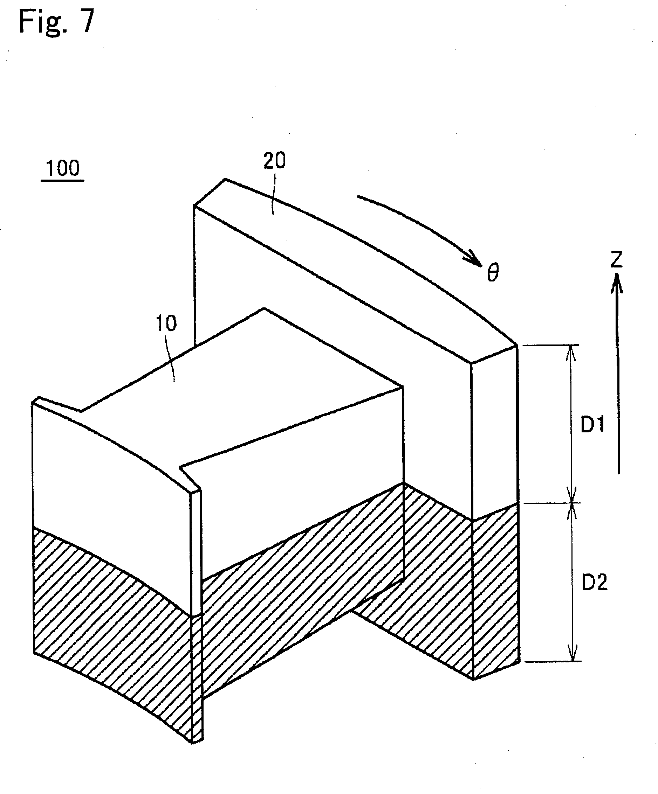

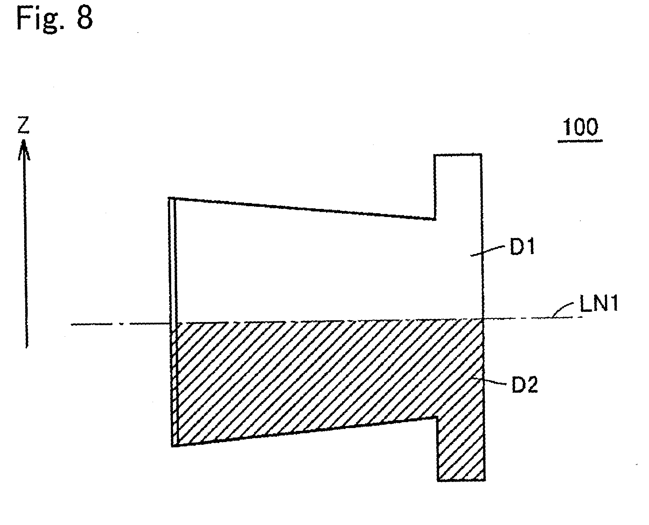

Fig. 7 is a perspective view of the stator core element 100 for one pole of the rotary electric machine according to this invention. Fig. 8 is a sectional view in the axial direction of the stator core element 100 of Fig. 7.

Referring to Fig. 7, the stator core element 100 is formed of two compacts (split stator core elements) D1, D2 bonded along the axial direction (direction z). The compact D1 and the compact D2 (corresponding to the shaded region in the figure) have the same shape, and they are bonded through their horizontal surfaces which are intermediate planes (intermediate planes parallel to the axial-directional end face of the stator core element 100) in a direction perpendicular to the axial direction.

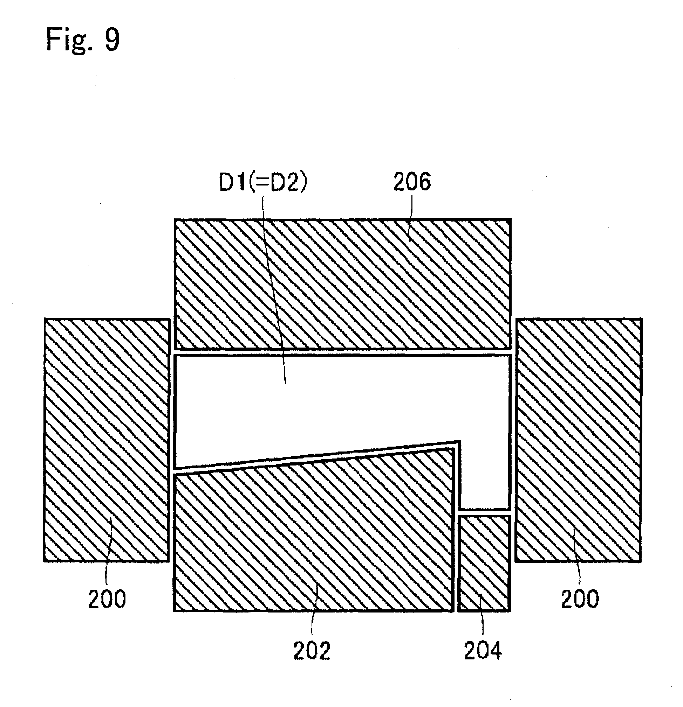

A molding step of the compact D1 (= the compact D2) is described below. Fig. 9 is a diagram illustrating the molding step of the compact D1 (= D2). Pressing in the circumferential direction is performed in the same manner as a conventional method, and its description is omitted.

Referring to Fig. 9, the compact D1 (D2 also has the same shape, but only D1 is used here) is formed by pressing magnetic powder, which is charged in a die 200, in a vertical direction by a punch 206 disposed above the die 200 and punches 202, 204 disposed below it. It is apparent from Fig. 9 that one end face (lower part in the figure) which becomes a horizontal surface of the compact D1 is pressed by the single punch 206. Also, the other end face of the compact D1 is pressed by the punch 202 for forming the tooth 10 and the punch 204 for forming the yoke portion 20. The punch 202 and the punch 204 have their strokes controlled separately so that the magnetic powder density of the compact D1 becomes uniform as described above. Specifically, it is determined that a degree of freedom for pressing control is 3 in the compact D1 molding step. It is lower than the four degrees of freedom in the molding step of the integrally-molded stator core element 100 shown in Fig. 6, and the pressing control is simplified.

As shown in Fig. 9, it is preferred that the punches 202, 204 which are disposed below the die 200 are configured into a split form. Before the magnetic powder is charged, a mold lubricant is coated on the wall surfaces of the die 200 and the punches 202, 204, 206 to improve ease of removing the compact from the mold, but to coat the mold lubricant onto the punches 202, 204 which do not have the wall surfaces on the same plane, it is configured to dispose the punches 202, 204 below the die 200 to jet the mold lubricant from above, so that coating can be performed easily and uniformly.

The compact D1 and the compact D2 which are formed in the molding step of Fig. 9 are bonded in the axial direction into one body to configure the stator core element 100. The compact D1 and the compact D2 are bonded by, for example, accommodating the compacts D1, D2 integrally into a housing which is a housing member for the rotary electric machine, or winding a coil around the tooth 10 of the stator core element 100 which is formed of the compacts D1, D2, or the like.

As described above, for the stator core element 100 of the invention, a split-type stator core element is adopted, so that a degree of freedom of the pressing control is lowered. Therefore, the production cost can be prevented from increasing, and productivity can be improved.

The die 200 and the punches 202, 204, 206 shown in Fig. 9 configure the production apparatus of the invention. In detail, the punch 206 above the die 200 configures a "first pressing portion", and the punches 202, 204 below the die 200 configure a "second pressing portion". Especially, in the second pressing portion, the punch 204 constitutes a "plane surface pressing member", and the punch 202 constitutes an "inclined surface pressing member".

It is noted that the foregoing embodiments disclosed are considered as illustrative only and not limitative of the invention. The scope of the invention is illustrated not by the above descriptions but by the scope of the claims, and all suitable modifications within the range of the claims, as well as equivalents within the scope of the claims, may be included.

### INDUSTRIAL APPLICABILITY

The present invention is used for production of a rotary electric machine such as a motor.

## Claims

1. A stator core element, a plurality of which are arranged around the axis to configure a stator of a rotary electric machine, comprising:
a yoke portion which is arranged at the outer circumference of the stator, and
a tooth portion which is inwardly projected from the yoke portion, wherein:
the tooth portion has a trapezoidal cross section expanded inwardly which is formed by a plane passing through the center parallel to the axis and a trapezoidal cross section expanded outwardly which is formed by a plane perpendicular to the axis.

2. The stator core element according to claim 1, wherein the tooth portion has a constant cross-sectional area in a radial direction.

3. The stator core element according to claim 1, wherein:
both end surfaces in a circumferential direction of the tooth portion close to the yoke portion are smaller by h than both ends of the inside surface of the yoke portion,
both end surfaces in a circumferential direction of the inside end portion of the tooth portion are smaller by j in comparison with a fan shape obtained by connecting the center and the both ends in the circumferential direction of the yoke portion,
both end surfaces in the axial direction of the tooth portion close to the yoke portion are smaller by m than both end surfaces in the axial direction of the yoke portion,
both end surfaces in the axial direction of the inside end portion of the tooth portion are smaller by k than both end surfaces in the axial direction of the yoke portion, and
h has a size corresponding to m, and j has a size corresponding to k.

4. The stator core element according to claim 1, wherein the stator core element is formed by bonding two split stator core elements having the same shape which are divided by a plane perpendicular to the axis.

5. The stator core element according to claim 1, wherein the stator core element is formed of a compressed powder magnetic core material.

6. The stator core element according to claim 1, wherein:
the yoke portion has projected portions which are projected in the axial direction from the end surfaces of the tooth portion to opposite sides in the axial direction, and
the projected portions are determined to prevent the outermost circumferential surface of the coil wound around the tooth portion from exceeding the projected portions.

7. The stator core element according to claim 1, wherein a cross section in the radial direction of the yoke portion has an area which is one half or more of a cross section perpendicular to the radial direction of the tooth.

8. The stator core element according to claim 1, wherein a bonded portion of the yoke portion and the tooth portion has a cross-sectional area which is equal to or greater than the area of a cross section perpendicular to the radial direction of the tooth portion.

9. A production apparatus for producing a split stator core element which has a stator core element divided, a plurality of the split stator core elements being annularly arranged with the axis of a rotary electric machine as the center to configure a stator, comprising:
a first pressing portion which forms one side end surface of the split stator core by pressing magnetic powder from one side of the axial direction and which has a plane surface perpendicular to the axial direction, and
a second pressing portion which forms the other side end surface of the split stator core by pressing magnetic powder from the other side of the axial direction and which includes a plane surface pressing member having a plane surface perpendicular to the axial direction of the other side end face and an inclined surface pressing member having an inclined surface inclined to a plane surface perpendicular to the axial direction of the other end face.

10. The production apparatus according to claim 9, wherein the split stator core element includes:
a plate-shaped yoke portion, and
a tooth portion projecting from the inner surface of the yoke portion toward the center; and
one directional side end face is a plane surface as a whole including the yoke portion and the tooth portion, and the other side end face has a plane surface for the yoke portion and an inclined surface for the tooth portion; and
the second pressing portion presses to form the axial-directional end face of the yoke portion by the plane surface pressing member and presses to form the axial-directional end face of the tooth portion by the inclined surface pressing member.

11. A production method for producing a stator core element, a plurality of which are annularly arranged with the axis of a rotary electric machine as the center to configure a stator, comprising:
molding to form split stator core elements, and
bonding the obtained split stator core elements,
wherein the molding step includes:
pressing magnetic powder from one side of the axial direction by a plane surface perpendicular to the axial direction to form one side end face of the split stator core, and
pressing the magnetic powder from the other side of the axial direction by a plane surface perpendicular to the axial direction and pressing by an inclined surface inclined to a plane surface perpendicular to the axial direction.
